# EUROPÄISCHE PATENTSCHRIFT

(11) **EP 0 525 468 B1**
(45) Veröffentlichungstag und Bekanntmachung des Hinweises auf die Patenterteilung: **15.04.1998**
(21) Anmeldenummer: 92111708.1
(22) Anmeldetag: 09.07.1992
(51) Int. Cl.: H02P 8/00, H02K 37/00

(54) **Verfahren zum Ansteuern eines Schrittmotors**
Method for controlling a stepping motor
Procédé pour la commande d'un moteur pas à pas

(30) Priorität: 19.07.1991 DE 4123982
(43) Veröffentlichungstag der Anmeldung: 03.02.1993
(73) Patentinhaber: DRE-Dr. RISS ELLIPSOMETERBAU GmbH, D-23909 Ratzeburg (DE)
(72) Erfinder: Riss, Udo, Dr.-Ing., W-2418 Ratzeburg (DE)
(74) Vertreter: Vollmann, Heiko, Dipl.-Ing.

(56) Entgegenhaltungen:
- WO-A-89/07859
- US-A- 4 742 287
- PATENT ABSTRACTS OF JAPAN, unexamined applications, E Field, Band 14, Nr. 374, 13. August 1990, THE PATENT OFFICE JAPANESE GOVERNMENT, Seite 138 E 946; & JP-A-02 136 099 (MATSUSHITA)

## Beschreibung

Die Erfindung betrifft ein Verfahren zum Ansteuern eines Schrittmotors - eines Rotationsschrittmotors oder eines Linearschrittmotors - zum Anfahren einer definierten Nullstellung, wobei der Schrittmotor in Hauptschritten und innerhalb jedes Hauptschrittes in Zwischenschritten ansteuerbar ist sowie eine Steuerung für einen solchen Schrittmotor.

Schrittmotoren gewinnen heutzutage mehr und mehr an Bedeutung, da mit ihnen bestimmte Motorstellungen, sei es ein bestimmter Drehwinkel zwischen Rotor und Stator bei einem Rotationsschrittmotor oder eine bestimmte Stellung zwischen den zueinander beweglichen Motorteilen bei einem Linearschrittmotor - vergleichsweise genau angefahren werden können. Während man in den Anfängen dieser Technik den Motor zunächst nur in Vollschritten ansteuerte und eine höhere Ganggenauigkeit durch Erhöhung der Zahl der möglichen Vollschritte pro Rotorumdrehung bzw. pro Vorschublängeneinheit zu erreichen versuchte, so hat man inzwischen durch Zwischenschrittansteuerung eine enorme Ganggenauigkeit erreicht. Diese ist durch eine ausgeklügelte Fehlerkorrektur inzwischen so groß, daß beispielsweise bei einem Rotationsschrittmotor eine Ganggenauigkeit von ± 0,0005° mit einer Auflösung von 0,001° erreicht wird.

Für eine derartige Fehlerkorrektur ist es notwendig, daß der Schrittmotor nach dem Ausschalten und Wiedereinschalten eine definierte Stellung, die sogenannte Nullstellung, mit hoher Genauigkeit wieder anfahren kann.

Bisher war für eine solch hochgenaue Nullstellungsreproduzierbarkeit ein erheblicher meß- bzw. sensortechnische Aufwand erforderlich, noch viel aufwendiger war die hierzu erforderliche Auswertelektronik. Derartige Meßanordnungen, die eine Rückmeldung über die exakte Motorposition erlauben, sind nicht nur baulich aufwendig und somit teuer, sondern auch in hohem Maße anfällig gegen äußere Einflüsse wie beispielsweise Erschütterungen, mechanische Einwirkungen, Staubeinwirkungen und dergleichen.

Hiervon ausgehend liegt der Erfindung die Aufgabe zugrunde, ein Verfahren zum Ansteuern eines Schrittmotors der eingangs genannten Art so auszubilden, daß mit möglichst einfachen technischen Mitteln eine definierte Motorstellung exakt wieder anfahrbar ist.

Diese Aufgabe wird gemäß der Erfindung dadurch gelöst, daß der Motor mit einer der definierten Stellung entsprechenden Phasenstromkombination angesteuert wird, wonach über einen zwischen den zueinander beweglichen Motorteilen, beispielsweise zwischen Motor und Stator angeordneten Referenzschalter geprüft wird, ob sich der Motor in dieser definierten Stellung befindet. Sobald der Referenzschalter anspricht, ist diese definierte Stellung erreicht. Beim Nichtansprechen des Schalters wird der Motor zur Ausführung einer Bewegung in der Größenordnung mehrerer Hauptschritte angesteuert und dann mit der vorerwähnten Phasenstromkombination wiederum angesteuert, und dies so lange, bis der Referenzschalter anspricht und die definierte Stellung erreicht ist.

Die erfindungsgemäße Lösung macht sich die Steuerung des Motors selbst zu Nutze, um die Nullstellung mit höchster Genauigkeit anzufahren und benötigt nur einen vergleichsweise ungenauen Referenzschalter, der lediglich die Aufgabe hat, die Mehrdeutigkeit der Phasenstromkombination auszuschalten. Diese Mehrdeutigkeit liegt jedoch in der Größenordnung mehrerer Hauptschritte, was technisch unproblematisch, insbesondere robust und störunanfällig erfaßt werden kann. Es sei hier nur beispielhaft erwähnt, daß bei üblichen Rotationsschrittmotoren, die bis zu 1000 Haupt- bzw. Vollschritte pro Rotorumdrehung aufweisen, für den Referenzschalter eine Auflösung von 0,36° ausreichen würde, um einen Vollschritt zu erfassen. Da bei den heute eingesetzten Mehrphasenschrittmotoren sich die Phasenstromkombinationen erst nach einer Weiterbewegung in der Größenordnung mehrerer Hauptschritte wiederholen, genügt für den Referenzschalter in der Praxis eine Auflösung von 1°.

Es versteht sich, daß beim Nichtansprechen des Referenzschalters nicht unbedingt mehrere Hauptschritte ausgeführt werden müssen, sondern lediglich eine Bewegung die der Größe mehrerer Hauptschritte entspricht. Bevorzugt wird diese Größe so gewählt, daß die Zahl der Hauptschritte doppelt so groß wie die Phasenzahl des Schrittmotors ist. Dann ist nämlich bei den häufigst eingesetzten Zwei-, Vier- und Fünfphasenschrittmotoren gewährleistet, daß diese Größe etwa dem Abstand bzw. dem Winkelabstand der Wiederkehr der Phasenstromkombination entspricht.

Bei Rotationsschrittmotoren kann durch Mehrfachumdrehungen die definierte Rotorstellung mehrfach angefahren werden, ohne daß ein an die Rotorwelle angeschlossenes beispielsweise Lineargetriebe sich in der selben Stellung befindet. Dann ist es zweckmäßig, um die definierte Stellung wieder anfahren zu können, einen Zähler vorzusehen, der die Anzahl der Rotorumdrehungen erfaßt. Bevorzugt wird der Zähler durch den Referenzschalter gesteuert, so daß lediglich eine elektronische Einrichtung als Zähler, jedoch keine weitere Sensorik erforderlich ist. Der Zähler kann auch rein elektronisch arbeiten, beispielsweise durch Erfassung der Hauptschritte. Er wird bevorzugt so ausgelegt, daß er je nach Drehrichtung bzw. Bewegungsrichtung des Motors Werte addiert bzw. subtrahiert.

Besonders vorteilhaft ist es, wenn als Phasenstromkombination die eines Vollschrittes verwendet wird, da diese besonders einfach anfahrbar ist.

Wie oben dargelegt, braucht der Referenzschalter keine hohe Ganggenauigkeit aufzuweisen, es können daher sowohl berührende als auch berührungsfreie Schalter eingesetzt werden. Bevorzugt ist selbstverständlich ein berührungsfrei arbeitender Schalter, als besonders zuverlässig und einfach im Aufbau hat sich hierbei eine Lichtschranke, insbesondere eine Reflektionslichtschranke erwiesen, da hierdurch nur geringe Veränderungen am Motor, insbesondere an dem unwuchtgefährdeten Rotor anzubringen sind.

Um Hysterese und andere systembedingte Fehler beim Anfahren der definierten Nullstellung zu minimieren, ist es von Vorteil, wenn der Motor so gesteuert wird, daß nach dem ersten Erreichen der definierten Stellung, also nach dem Herantasten in Schritten in der Größenordnung mehrerer Hauptschritte, der Motor in eine vorbestimmte Position verfahren wird, um von dort direkt die definierte Stellung erneut anzufahren. Die vorbestimmte Position braucht nicht mit hoher Genauigkeit angefahren zu werden, wenn diese genügend weit von der definierten Stellung entfernt ist.

Die Erfindung lehrt weiterhin eine Steuerung für einen Schrittmotor in Haupt- und Zwischenschritten, wobei die Zwischenschritte durch Phasenstromkombinationen angefahren werden, die dadurch gekennzeichnet ist, daß eine definierte Motornullstellung durch eine vorbestimmte Phasenstromkombination und die Stellung eines zwischen den zueinander beweglichen Motorteilen angeordneten Referenzschalters bestimmt ist. Wenn als Schrittmotor ein Rotationsschrittmotor eingesetzt wird, ist es zweckmäßig, auch einen richtungsabhängigen Zähler zur Erfassung der Zahl und Richtung der Rotorumdrehungen bezogen auf die Rotornullstellung vorzusehen. Dieser kann rein elektronisch arbeiten, beispielsweise durch Auswertung der Phasenströme. Um auch nach dem Ausschalten des Motors ein Wiederereichen der definierten Nullstellung zu ermöglichen, ist es zweckmäßig, den Zähler mit einem Continuous-Memory-Baustein auszustatten.

Die Erfindung ist nachfolgend anhand eines in der Zeichnung dargestellten Ausführungsbeispiels näher erläutert. Es zeigen:
- Figur 1: in stark schematisierter Darstellung die Seitenansicht eines Rotationsschrittmotors mit Referenzschalter und
- Figur 2: den Verlauf der Phasenströme aufgetragen über dem Drehwinkel.

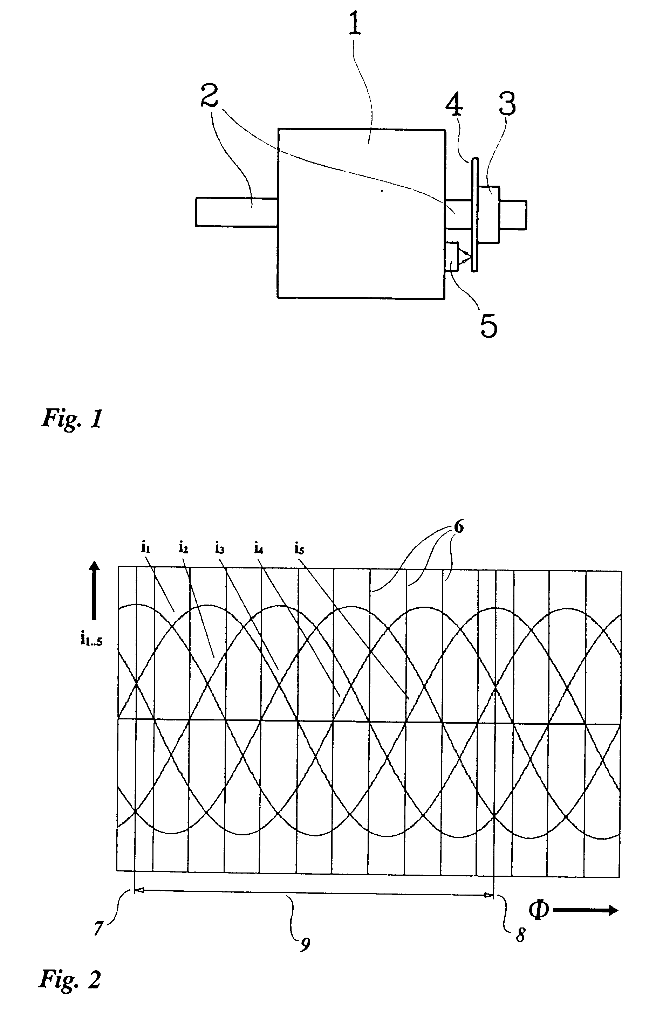

In den Figuren ist ein 5-Phasenschrittmotor dargestellt, also ein Motor mit fünf Statorwicklungen. Der Stator ist in Figur 1 mit 1 gekennzeichnet. Der darin drehbar gelagerte Rotor ist nicht im einzelnen dargestellt und sitzt drehfest auf einer Rotorwelle 2, die zum Antrieb an ein weiteres Aggregat, beispielsweise ein Lineargetriebe oder dergleichen anschließbar ist.

Fest mit der Rotorwelle 2 verbunden ist eine Scheibe 3, die den Rotor radial überragt und auf der zur Stirnseite des Stators 1 gerichteten Seite eine Markierung 4 aufweist. Die Markierung 4 bildet Teil einer Reflektionslichtschranke 5, die an der Stirnseite des Stators angebracht ist und in Verbindung mit der Markierung 4 den vorerwähnten Referenzschalter bildet. Solche Referenzlichtschranken sind hinlänglich bekannt und bedürfen daher keiner weiteren Beschreibung.

In Figur 2 sind die Phasenströme i₁ bis i₅ der einzelnen Statorwicklungen dargestellt. Die in gleichem Abstand nebeneinander angeordneten senkrechten Linien 6 kennzeichnen die Hauptschritte des Motors, dazwischenliegende Linien, wie beispielsweise die Linie 7 oder die Linie 8 kennzeichnen Zwischenschritte. Wie das Diagramm nach Figur 2 verdeutlicht, kehrt jede Phasenstromkombination in regelmässigem Abstand wieder. Der Abstand 9 der mit 7 und 8 gekennzeichneten Phasenstromkombinationen beträgt bei dem anhand von Figur 2 dargestellten 5-Phasenschrittmotor einem Drehwinkel φ, der in der Größenordnung von zehn Hauptschritten liegt. In der Darstellung nach Figur 2 fallen die Phasenschrittkombinationen 7 und 8 nicht mit den Hauptschritten zusammen. Der dargestellte 5-Phasenschrittmotor weist pro Rotorumdrehung 500 Vollschritte auf, so daß der in Figur 2 mit 9 gekennzeichnete Abstand einem Drehwinkel von 7,2° entspricht. Die Ganggenauigkeit des Referenzschalters 4, 5 muß also lediglich so gewählt sein, daß diese 7,2°-Auflösung erreicht wird, was mit Reflektionslichtschranken üblicher Bauart auch unter ungünstigsten Bedingungen in der Regel erreicht wird.

Definiert man bei der Phasenstromdarstellung nach Figur 2 die definierte Stellung durch die mit 8 gekennzeichnete Phasenstromkombination, so würde, wenn der Motor diese Stellung vom Nullpunkt des Diagramms aus anfahrend auffinden sollte, zunächst die entsprechende Phasenstromkombination angesteuert. Der Motor würde dann von der linken Stellung im Diagramm ausgehend die Phasenstromkombination anfahren, jedoch bei 7 anhalten. Die Abfrage des Referenzschalters würde dann jedoch ergeben, daß zwar die vorbestimmte Phasenstromkombination erreicht ist, nicht jedoch die definierte Rotorstellung. Die Steuerung würde daraufhin (bei dem vorliegenden 5-Phasenschrittmotor) den Rotor in einer Größenordnung von etwa zehn Hauptschritten verfahren, bis wiederum diese Phasenschrittkombination erreicht ist, und zwar am Punkt 8. In diesem Punkt wird auch die Reflektionslichtschranke 5 ansprechen, da dann die Markierung 4 mit der Reflektionslichtschranke 5 zur Deckung kommt und der Schalter anspricht. Nun ist der definierte Nullpunkt erstmals erreicht. Um Hysterese und andere Systemfehler gering zu halten, verfährt nun die Steuerung den Rotor um eine fest definierte Anzahl von Zwischenschritten, um dann die Nullposition 8 erneut in einem Gang anzufahren.

Da bei jeder Rotorumdrehung die Position 8 wieder erreicht wird, wird innerhalb der Steuerung die Anzahl und Richtung der von der definierten Stellung 8 ausgehenden Rotorumdrehungen erfaßt. Dies kann auf elektronischem Wege über die Phasenströme oder aber auch unter Zurhilfenahme des Referenzschalters 4, 5 erfolgen.

Es versteht sich, daß die anhand eines Rotationsschrittmotors beschriebene Erfindung ohne weiteres auch bei einem Linearschrittmotor anwendbar ist, wobei der vorerwähnte Zählvorgang dann in der Regel entfallen kann.

## Patentansprüche

1. Verfahren zum Ansteuern eines Schrittmotors (1, 2) zum Anfahren einer definierten Stellung (8) wobei der Schrittmotor (1, 2) in Hauptschritten und innerhalb jedes Hauptschrittes in Zwischenschritten ansteuerbar ist, dadurch gekennzeichnet, daß der Motor (1, 2) mit einer der definierten Stellung (8) entsprechenden Phasenstromkombination (i₁ - i₅) angesteuert wird, wonach über einen zwischen denzueinander beweglichen Motorteilen (1, 2) angeordneten Referenzschalter (4, 5) geprüft wird, ob sich der Motor (1, 2) in dieser definierten Stellung (8) befindet, wobei beim Ansprechen des Referenzschalters (4, 5) die definierte Stellung (8) erreicht ist und beim Nichtansprechen eine Bewegung von der Größe (10) mehrerer Hauptschritte (6) ausgeführt wird, dann mit der vorerwähnten Phasenstromkombination (i₁ - i₅) angesteuert und der Referenzschalter (4, 5) erneut geprüft wird bis die definierte Stellung (8) erreicht ist.

2. Verfahren nach Anspruch 1, dadurch gekennzeichnet, daß die Zahl der Hauptschritte (6), um die der Motor (1, 2) beim Nichtansprechen des Referenzschalters (4, 5) weiterbewegt wird, doppelt so groß wie die Phasenzahl des Schrittmotors (1, 2) ist.

3. Verfahren nach Anspruch 1 oder 2 zum Ansteuern eines Rotationsschrittmotors (1, 2), dadurch gekennzeichnet, daß zur Erfassung der Anzahl der von der definierten Stellung (8) ausgeführten Rotorumdrehungen ein Zähler vorgesehen ist.

4. Verfahren nach Anspruch 3, dadurch gekennzeichnet, daß der Referenzschalter (4, 5) zur Ermittlung der Anzahl der von der definierten Stellung (8) aus ausgeführten Rotorumdrehungen eingesetzt wird.

5. Verfahren nach Anspruch 3 oder 4, dadurch gekennzeichnet, daß der Zähler drehrichtungsabhängig addiert oder subtrahiert.

6. Verfahren nach einem der vorhergehenden Ansprüche, dadurch gekennzeichnet, daß als Phasenstromkombination (i₁ - i₅) die eines Vollschrittes (6) verwendet wird.

7. Verfahren nach einem der vorhergehenden Ansprüche, dadurch gekennzeichnet, daß als Referenzschalter eine Lichtschranke (4, 5) eingesetzt wird.

8. Verfahren nach einem der vorhergehenden Ansprüche, dadurch gekennzeichnet, daß nach dem ersten Erreichen der definierten Stellung (8) der Motor (1, 2) in eine vorbestimmte Position verfahren wird, um von dort direkt die definierte Stellung (8) erneut anzufahren.

9. Steuerung für einen Schrittmotor in Haupt- und Zwischenschritten, wobei die Zwischenschritte durch Phasenstromkombinationen angefahren werden, dadurch gekennzeichnet, daß eine definierte Motornullstellung (8) durch eine vorbestimmte Phasenstromkombination (i₁ - i₅) und die Stellung eines zwischen den zueinander beweglichen Motorteilen (1, 2) angeordneten Referenzschalters (4, 5) bestimmt ist.

10. Steuerung nach Anspruch 9 für einen Rotationsschrittmotor, gekennzeichnet durch einen richtungsabhängigen Zähler zur Erfassung der Anzahl der Rotorumdrehungen bezogen auf die Rotornullstellung (8).

## Claims

1. A device for controlling a stepper motor (1, 2) for driving to a defined position (8), wherein the stepper motor (1,2) in main steps and within each main step can be controlled in intermediate steps, characterised in that the motor (1, 2) is controlled with a phase current combination (i₁ - i₅) corresponding to the defined position (8), whereafter via a reference switch (4, 5) arranged between the motor parts (1, 2) movable to one another, it is checked whether the motor (1, 2) is located in this defined position (8), wherein with a response of the reference switch (4, 5) the defined position is reached and with no response a movement of the dimension (10) of several main steps (6) is carried out, is then controlled with the previously mentioned phase current combination (i₁ - i₅) and the reference switch (4, 5) is checked again until the defined position (8) is reached.

2. A method according to claim 1, characterised in that the number of main steps (6) about which the motor (1, 2) is moved further, given no response of the reference switch, is double as large as the phase number of the stepper motor (1, 2).

3. A method according to claim 1 or 2 for controlling a rotational stepper motor (1, 2), characterised in that for acquiring the number of the rotor revolutions carried out from the defined position (8), a counter is provided.

4. A method according to claim 3, characterised in that the reference switch (4, 5) is used for determining the number of rotor revolutions carried out from the defined position (8).

5. A method according to claim 3 or 4, characterised in that the counter adds or subtracts depending on the rotational direction.

6. A method according to one of the preceding claims, characterised in that as a phase current combination (i₁ -i₅) that of a complete step (6) is used.

7. A method according to one of the preceding claims, characterised in that as a reference switch a light barrier (4, 5) is employed.

8. A method according to one of the preceding claims, characterised in that after the first reaching of the defined position (8) the motor (1, 2) is driven into a predetermined position in order from here to directly drive again to the defined position (8).

9. A control for a stepper motor in main and intermediate steps, wherein the intermediate steps are driven to by phase current combinations, characterised in that a defined motor zero position (8) is determined by a predetermined phase current combination (i₁ -i₅) and the position of a reference switch (4, 5) arranged between the motor parts (1, 2) movable to one another.

10. A control according to claim 9 for a rotation stepper motor, characterised by a direction dependent counter for acquiring the number of rotor revolutions with respect to the rotor zero position (8).

## Revendications

1. Procédé pour commander un moteur pas-à-pas (1, 2) afin d'approcher une position définie (8), le moteur pas-à-pas (1,2) pouvant être commandé selon des pas principaux et, à l'intérieur de chaque pas principal, selon des'pas intermédiaires, caractérisé en ce que le moteur (1, 2) est excité avec une combinaison de courants de phase (i₁-i₅) correspondant à la position définie (8), après quoi un contrôle est effectué par l'intermédiaire d'un commutateur de référence (4,5) disposé entre les parties (1,2) du moteur, qui sont mobiles l'une par rapport à l'autre, pour savoir si le moteur (1,2) se trouve dans cette position définie (8), la position définie (8) étant atteinte dans le cas de la réponse du commutateur de référence (4,5) tandis que, dans le cas d'une absence de réponse, un déplacement de la valeur (10) de plusieurs pas principaux (6) est exécuté, puis une excitation est réalisée avec la combinaison de courants de phase (i₁-i₅) mentionnée précédemment et le commutateur de référence (4,5) est à nouveau contrôlé jusqu'à ce que la position définie (8) soit atteinte.

2. Procédé selon la revendication 1, caractérisé en ce que le nombre des pas principaux (6), sur lesquels le moteur (1,2) continue à avancer en cas d'absence de réponse du commutateur de référence (4,5), est égal au double du nombre de phases du moteur pas-à-pas (1,2).

3. Procédé selon la revendication 1 ou 2 pour commander un moteur pas-à-pas rotatif (1,2), caractérisé en ce qu'un compteur est prévu pour détecter le nombre des rotations du rotor exécutées à partir de la position définie (8).

4. Procédé selon la revendication 3, caractérisé en ce que le commutateur de référence (4,5) est utilisé pour déterminer le nombre des rotations du rotor exécutées à partir de la position définie (8).

5. Procédé selon la revendication 3 ou 4, caractérisé en ce que le compteur exécute une addition ou une soustraction en fonction du sens de rotation.

6. Procédé selon l'une des revendications précédentes, caractérisé en ce qu'on emploie comme combinaison de courants de phase (i₁-i₅) celle d'un pas complet (6).

7. Procédé selon l'une des revendications précédentes, caractérisé en ce qu'on utilise comme commutateur de référence un relais photoélectrique (4,5).

8. Procédé selon l'une des revendications précédentes, caractérisé en ce qu'après la première fois où la position définie (8) a été atteinte, le moteur (1,2) est amené dans une position prédéterminée pour approcher à nouveau directement, à partir de là, la position définie (8).

9. Commande pour un moteur pas-à-pas selon des pas principaux et des pas intermédiaires, l'avance sur les pas intermédiaires étant obtenue par des combinaisons de courants de phase, caractérisée en ce qu'une position zéro définie (8) du moteur est déterminée par une combinaison prédéterminée de courants de phase (i₁-i₅) et par la position d'un commutateur de référence (4,5) disposé entre les parties (1,2) du moteur, qui sont mobiles l'une par rapport à l'autre.

10. Commande selon la revendication 9, pour un moteur pas-à-pas rotatif, caractérisée par un compteur, qui compte en fonction du sens, pour détecter le nombre des rotations du rotor par rapport à la position zéro (8) de ce dernier.
